# EUROPÄISCHE PATENTANMELDUNG

(11) **EP 4 454 449 A1**
(43) Veröffentlichungstag der Anmeldung: **30.10.2024**
(21) Anmeldenummer: 24172792.4
(22) Anmeldetag: 26.04.2024
(51) Int. Cl.: A01C 9/02

(54) **LEGEVORRICHTUNG ZUM LEGEN VON KARTOFFELN**

(30) Priorität: 26.04.2023 DE 202023102248 U
(71) Anmelder: Grimme Landmaschinenfabrik GmbH & Co. KG, 49401 Damme (DE)
(72) Erfinder: Lange gen. Detert, Ansgar, 49324 Melle (DE); Plöger, Werner, 49163 Bohmte (DE); Wulferding, Henrik, 27248 Ehrenburg (DE)
(74) Vertreter: Wischmeyer, André

(57) **Zusammenfassung**

Legevorrichtung zum Legen von Kartoffeln, insbesondere vorzugsweise als Becherlegemaschine ausgebildete Legevorrichtung für Kartoffeln, umfassend einen Schöpfraum (12) zur Bevorratung von zu vereinzelnden Vermehrungsfrüchten und zumindest eine zum Ausgeben der Vermehrungsfrüchte (4) ausgebildete Fördervorrichtung (6), die zumindest ein im Betrieb in eine Umlaufrichtung umlaufendes Trägerelement (8), mehrere an dem Trägerelement (8) angeordnete Förderelemente (10) und eine Führungseinrichtung (14) mit zumindest einem Führungselement (22) umfasst, das derart zur Führung der Vermehrungsfrüchte (4) in einen Ausgabebereich (26) ausgebildet ist, dass die Vermehrungsfrüchte (4) im Ausgabebereich (26) in eine Ausgaberichtung von der Legevorrichtung ausgegeben werden, wobei jeweilige Förderelemente (10) im Betrieb eine Bahn beschreiben, die zur Aufnahme einer Vermehrungsfrucht (4) durch den Schöpfraum (12) verläuft, wobei die Führungseinrichtung (14) dergestalt ausgebildet ist, dass ein vertikaler Anteil der Ausgaberichtung kleiner ist als ein horizontaler Anteil der Ausgaberichtung, insbesondere wobei die Ausgaberichtung zumindest in etwa horizontal verläuft.

## Beschreibung

Die vorliegende Erfindung betrifft eine Legevorrichtung zum Legen von Hackfrüchten, insbesondere eine vorzugsweise als Becherlegemaschine ausgebildete Legevorrichtung für Kartoffeln, umfassend einen Schöpfraum zur Bevorratung von zu vereinzelnden Vermehrungsfrüchten der Hackfrüchte, beispielsweise von Kartoffelknollen, und zumindest eine zum Ausgeben der Vermehrungsfrüchte ausgebildete Fördervorrichtung, die zumindest ein im Betrieb in einer Umlaufrichtung umlaufendes Trägerelement, mehrere an dem Trägerelement angeordnete Förderelemente und ein Führungseinrichtung mit zumindest einem Führungselement umfasst, das derart zur Führung der Vermehrungsfrüchte in einem Ausgabebereich ausgebildet ist, dass die Vermehrungsfrüchte im Ausgabebereich in eine Ausgaberichtung von der Legevorrichtung ausgegeben werden, wobei jeweilige Förderelemente im Betrieb eine Bahn beschreiben, die zur Aufnahme einer Kartoffel durch den Schöpfraum verläuft.

Eine solche Legevorrichtung ist beispielsweise in der US 2006/283363 A1 beschrieben. Bei der Abgabe von Kartoffeln aus der auf dem Untergrund bewegten Legemaschine kommt es vor, dass die als Kartoffelknollen bzw. Kartoffeln ausgebildeten Vermehrungsfrüchte aufgrund hoher Geschwindigkeitsdifferenzen zwischen Fördervorrichtung und Untergrund nicht in der gewünschten Position liegenbleiben. Weiterhin können Störeinflüsse etwaiger Teile der Fördervorrichtung ungewünschte Impulse auf die Vermehrungsfrüchte ausüben, so dass die Ausgaberichtung schlechter vorgebbar ist. In Summe führt dies dazu, dass die Abstände der Kartoffelnester bzw. Kartoffelpflanzen einer Reihe ungewünscht stark variiert.

Es ist Aufgabe der vorliegenden Erfindung, eine präzisere Abgabe der Vermehrungsfrüchte der später zu erntenden Hackfrüchte aus der Legevorrichtung zu ermöglichen.

Die Aufgabe wird gelöst durch einen Gegenstand gemäß Anspruch 1. Vorteilhafte Ausgestaltungen der Erfindung sind den Unteransprüchen sowie der nachfolgenden Beschreibung zu entnehmen.

Erfindungsgemäß ist die Führungseinrichtung dergestalt ausgebildet, dass ein vertikaler Anteil der Ausgaberichtung kleiner ist als ein horizontaler Anteil der Ausgaberichtung, insbesondere wobei die Ausgaberichtung zumindest in etwa und vorzugsweise genau horizontal und mithin parallel zu einem ebenen Untergrund verläuft. Der horizontale Bewegungsanteil der ausgegebenen Hackfrüchte ist aufgrund der von der Legevorrichtung sowie etwaig der Schwerkraft bewirkten Bewegung beim Austritt aus der Legevorrichtung größer als der vertikale Bewegungsanteil, so dass die Relativgeschwindigkeit zwischen Vermehrungsfrucht und Untergrund bzw. Boden geringer ist als die horizontale Relativgeschwindigkeit zwischen Legevorrichtung und Boden. Auch gegenüber den Legevorrichtungen aus dem Stand der Technik ist die Relativgeschwindigkeit durch die Verwendung der Führungseinrichtung zwischen Vermehrungsfrucht und Untergrund bzw. Boden kontrollierter reduziert. Die Ausgaberichtung entspricht hierbei dem Vektor der Ausgabegeschwindigkeit.

Entsprechend ist auch die Ausgaberichtung der Vermehrungsfrucht als Vektor aufzufassen, der in einer Seitenansicht, quer zu der Hauptfahrtrichtung betrachtet in Richtung parallel zum Untergrund, erfindungsgemäß eine horizontale Komponente bzw. x-Komponente aufweist, die im Aus- und Abgabemoment der Vermehrungsfrucht (deutlich) größer ist als eine vertikale Komponente. Durch die verringerte Relativgeschwindigkeit kann die Vermehrungsfrucht ruhiger und gezielter auf dem Untergrund abgelegt werden, die Vermehrungsfrucht, beispielsweise eine Kartoffelknolle, weist relativ zum Boden einen geringeren horizontale Bewegungsimpuls auf. Insbesondere ergibt sich im Betrieb eine Beschleunigung in senkrechter Richtung zum Untergrund erst nach Abgabe aus der Führungseinrichtung. Die Vertikalgeschwindigkeit der Vermehrungsfrucht ist somit ebenfalls reduziert, was ebenfalls zu einer verbesserten Ablage der Vermehrungsfrucht führt.

Die Ausgaberichtung ist einer bestimmungsgemäßen Fortbewegungsrichtung der Legevorrichtung im Betrieb entgegengesetzt, insbesondere komplett oder nahezu komplett entgegengesetzt. Nahezu komplett entgegengesetzt umfasst hierbei Winkelabweichungen von bis zu 10° von der Horizontalen. Die Ausgaberichtung wird hierbei in einer Seitenansicht, quer zur Fortbewegungsrichtung betrachtet. In einer Draufsicht von oben sind die Ausgaberichtung und die Fortbewegungsrichtung vorzugsweise komplett entgegengesetzt.

Die Ausgaberichtung gilt (in der Seitenansicht) insbesondere dann als der Fortbewegungsrichtung entgegengesetzt, wenn sich eine Winkelabweichung von maximal 45°, bevorzugt von maximal 20° von der Horizontalen ergeben, die Ausgaberichtung also entsprechend geneigt ist. Eine möglichst horizontale Abgabe ist bevorzugt.

Die Fortbewegungsrichtung der Legevorrichtung ist diejenige Richtung, in die sich die Legevorrichtung entweder selbständig oder gezogen im Rahmen ihres bestimmungsgemäßen Einsatzes beim Legen von Vermehrungsfrüchten bewegt. Die Vermehrungsfrüchte werden von der Legevorrichtung somit insbesondere in Richtung der Fortbewegungsrichtung nach hinten abgegeben. Ab dem Austritt aus der Legemaschine begibt sich die Vermehrungsfrucht aufgrund der überlagerten Erdbeschleunigung auf eine parabelförmige Flugbahn mit einem mit der Fallhöhe zunehmenden Anteil an Vertikalgeschwindigkeit. Die anfänglich enthaltene Horizontalgeschwindigkeit bleibt während der Falldauer nahezu konstant, da sie von Faktoren wie beispielsweise dem Luftwiderstand nur unwesentlich beeinflusst wird. Die Relativgeschwindigkeit der Vermehrungsfrucht zum Boden ist im Abgabezeitpunkt geringer als die Relativgeschwindigkeit der Legevorrichtung zum Boden, so dass die Vermehrungsfrucht bei Auftreffen auf den Boden weniger stark abgelenkt wird und mithin die tatsächlichen Abstände zwischen einzelnen Vermehrungsfrüchten innerhalb einer Furche dichter an dem gewünschten Abstand verbleiben. Aufgrund der Erdbeschleunigung kann die Vertikalgeschwindigkeit der Vermehrungsfrucht zum Zeitpunkt des Auftreffens auf den Boden größer sein als die horizontale Geschwindigkeitskomponente der Bewegung.

Bei der vorliegenden Betrachtung wird davon ausgegangen, dass sich die Legevorrichtung im Falle einer bestimmungsgemäßen Benutzung auf einem horizontal verlaufenden Untergrund bzw. Boden bewegt und insofern eine horizontale Aufstandsfläche ausbildet. Die horizontalen und vertikalen Anteile der Ausgaberichtung beziehen sich dann auf eine solche Aufstandsfläche. Darüber hinaus kann ein Führungselement ein oder mehrteilig aufgebaut sein.

Der Ausgabebereich ist derjenige Bereich, durch den sich die Vermehrungsfrucht nach dem Lösen von der Fördervorrichtung bzw. der Führungseinrichtung bewegt. Das Führungselement ist zumindest abschnittsweise vorzugsweise unterhalb des Trägerelements angeordnet. Auch der Ausgabebereich, in dem die Vermehrungsfrucht sich von der Fördervorrichtung löst, befindet sich unterhalb und teilweise vor einzelnen Elementen der Legevorrichtung. Wie auch das Trägerelement ist auch das Führungselement direkt oder mittelbar an einem Vorrichtungsrahmen der Legevorrichtung gelagert.

Das Förderelement ist im Betrieb an dem Trägerelement angeordnet und läuft mit diesem um. Nach einer Vereinzelung der Vermehrungsfrüchte und einer etwaigen Umlenkung der Vermehrungsfrüchte mit dem umlaufenden Förderelement ist es besonders vorteilhaft, wenn das Führungselement zu einer Umlenkung der Vermehrungsfrüchte um zumindest 30°, bevorzugt um zumindest 45° und besonders bevorzugt um zumindest 60° ausgebildet ist. Eine vorteilhafte obere Grenze ist eine Umlenkung von 100° sowie insbesondere um 90°.

Durch diese Ausbildung des oder der Führungselemente wird die Vermehrungsfrucht aus einer nahezu vertikalen Bewegung, wie sie insbesondere bei Becherlegemaschinen vorkommt, in eine Bewegung mit einem im Wesentlichen, d.h. zumindest 45° übersteigenden horizontalen Anteil umgelenkt.

Vorzugsweise ist das Führungselement relativ zu einem Vorrichtungsrahmen zumindest im Betrieb ortsfest ausgebildet. Entsprechend können die Förderelemente, die im Betrieb umlaufen, die Vermehrungsfrüchte an dem Führungselement entlangführen. Alternativ können die Vermehrungsfrüchte auch aufgrund einer schwerkraftbedingten oder durch das Trägerelement bewirkten Beschleunigung durch das Führungselement umgelenkt werden.

Vorteilhafterweise kann das Führungselement als Leitflächenelement, insbesondere als Leitblech oder als Kunststoffelement, mit einer insbesondere dem Trägerelement zugewandten Leitoberfläche ausgebildet sein, die insbesondere zur Zentrierung von den Förderelementen vereinzelter Vermehrungsfrüchte vorgesehen ist. Eine solche kostengünstige Konstruktion ist insbesondere in Kombination mit einer durch die Förderelemente bewirkte Führung der Vermehrungsfrüchte an dem Leitblech entlang dazu geeignet, die Vermehrungsfrüchte gezielt auf dem Boden abzulegen.

Zur Zentrierung ist die Leitoberfläche in Förderrichtung betrachtet insbesondere mit einem konkaven Profil versehen, welches eine mittige Senke und höhere äußere Ränder bzw. Seiten aufweist.

Alternativ zu einem im Betrieb ortsfesten Führungselement kann dieses auch im Betrieb umlaufend ausgebildet sein, insbesondere wobei sich das Führungselement zumindest abschnittsweise in Richtung der Ausgaberichtung bewegt und somit diese gezielt die Geschwindigkeit der Vermehrungsfrucht beeinflusst. Hierdurch ist eine besonders kontrollierte Abgabe der Vermehrungsfrüchte möglich.

Insbesondere handelt es sich bei dem Führungselement um ein oder mehrere umlaufende Bänder, auf denen dann die von oberhalb des Bandes zugeführten Vermehrungsfrüchte schwerkraftbedingt zum Liegen kommen und dann von diesem in Richtung des Abgabebereichs gefördert werden. Das zumindest eine umlaufende Führungselement kann hierbei auch so dicht an den Förderelementen angeordnet sein, dass es diese berührt und an diesen anliegt. Hierdurch werden ebenfalls wieder in einer Seitenansicht betrachtet Förderräume ausgebildet, die eine Umlenkung und kontrollierte Förderung der Vermehrungsfrüchte besonders gut bewirken.

Es versteht sich, dass die Bereiche der Fördervorrichtung, in denen Vermehrungsfrüchte durch die Führungselemente in vertikaler Richtung und in Richtung mit oder insbesondere gegen die Fahrtrichtung geleitet oder gefördert werden, seitlich begrenzt sind oder sein können, um ein seitliches Wegfallen der Vermehrungsfrüchte zu verhindern. In den nachfolgend noch beschriebenen Verläufen der Führungselemente werden diese seitlichen Begrenzungen, sofern sie sinnvoller- oder notwendigerweise vorhanden sein sollten, nicht erwähnt.

Vorteilhafterweise ist die Legevorrichtung bzw. die Führungseinrichtung der Legevorrichtung mit einer Mehrzahl von Führungselementen versehen, wobei zumindest eines der Führungselemente als Leitflächenelement, insbesondere als Leitblech, und eines der Führungselemente im Betrieb umlaufend ausgebildet ist. Bei einer solchen Führungseinrichtung kann insbesondere eine Umlenkung über ein Leitblech mit einer Geschwindigkeitskontrolle über ein umlaufendes Führungselement z.B. in Form eines Förderbandes kombiniert werden. Anstelle eines Leitbleches kann auch ein Kunststoffleitelement verwendet werden.

Gemäß einer weiteren vorteilhaften Ausbildung der Erfindung ist das insbesondere als Riemenband ausgebildete Trägerelement durch zumindest zwei und insbesondere durch zumindest drei im Betrieb rotierende Umlenkelemente derart gelagert, dass ein an den Ausgabebereich angrenzender Trägerelementabschnitt im Betrieb zumindest im Wesentlichen geradlinig und insbesondere in die Ausgaberichtung verläuft. Mit einem unteren, z.B. in einer Seitenansicht geradlinigen Abschnitt wird seitens des Trägerelements eine horizontale Ablage der Vermehrungsfrüchte in Richtung des Abgabebereichs und insbesondere auch eine kontrollierte Bewegung der Vermehrungsfrucht in Ausgaberichtung gefördert.

Alternativ zu einem solchen geradlinigen Abschnitt kann durch eine einzelne mit einem großen Durchmesser, insbesondere zwischen 100 und 700 mm, versehene untere Umlenkrolle bei einer Becherlegemaschine eine erfindungsgemäße Abgabe der Vermehrungsfrüchte begünstigt werden. Insbesondere ist bei einer erfindungsgemäßen Becherlegemaschine mit einer oberen und einer unteren Umlenkrolle für das Trägerelement der Durchmesser der oberen Umlenkrolle kleiner und insbesondere maximal halb so groß wie der einer unteren Umlenkrolle.

Die Leitoberfläche ist insbesondere zur Zentrierung von den Förderelementen dann vorgesehen, wenn in Ausgaberichtung betrachtet zwei Reihen von Förderelementen auf dem Trägerelement angeordnet sind, deren vereinzelte Vermehrungsfrüchte gleichwohl in nur einer Reihe abgelegt werden sollen. Eine solche Zentrierung ist beispielsweise durch eine auch vorstehend beschriebene konkave Ausbildung des Leitflächenelements, insbesondere eines Leitblechs, (in Abgaberichtung betrachtet) umsetzbar.

Bei einer Lagerung des insbesondere als Förderband ausgebildeten umlaufenden Führungselements über zumindest zwei Umlenkelemente können diese Umlenkungen ausbilden, zwischen denen das Führungselement nahezu oder komplett horizontal verläuft, so dass eine Förderung der Vermehrungsfrüchte insbesondere horizontal zum Boden erfolgt. Zur Vermeidung ungewünschter Vibrationen des Förderbandes kann dieses in dem Abschnitt unterseitig von einem Leitflächenelement, z.B. einem Führungsblech, unterstützt sein.

Vorzugsweise umfasst die Führungseinrichtung gemäß einer weiteren erfindungsgemäßen Ausgestaltung der Erfindung einen im Betrieb insbesondere zumindest abschnittsweise parallel zum Führungselement und/oder in die Ausgaberichtung umlaufendes Gegenführungselement, dessen Drehrichtung gleich oder auch ungleich der Drehrichtung des Trägerelements sein kann. Sowohl das Führungselement als auch das Gegenführungselement befinden sich insbesondere zum Abgabebereich hin unterhalb des Trägerelements. Die Abgabe der Vermehrungsfrucht erfolgt unter Beeinflussung derselben durch das Führungselement und das Gegenführungselement, so dass die Vermehrungsfrucht besonders gut und gezielt kontrolliert zum Abgabebereich überführt werden kann.

Insbesondere weist die Führungseinrichtung mehrere im Betrieb umlaufende und insbesondere an dem Führungselement und/oder an dem Gegenführungselement angeordnete und sich lokal zur Umlaufrichtung angewinkelt erstreckende Mitnehmerelemente auf, die in Ergänzung oder auch alternativ zu einer Förderung der Vermehrungsfrüchte durch die Förderelemente hin zum Abgabebereich die Vermehrungsfrüchte mitnehmen und mitbewegen können. Insbesondere ist der Abstand der Mitnehmerelemente in Umlaufrichtung des Führungselements bzw. Gegenführungselements so groß, dass die Vermehrungsfrüchte zwischen diesen zu liegen kommen.

Vorteilhafterweise weist die Führungseinrichtung, insbesondere das Führungselement und/oder das Gegenführungselement, einen oberen Endabschnitt auf, der weiter von einer Aufstandsfläche beabstandet ist als eine Rotationsachse eines unteren, im Betrieb rotierenden und das Trägerelement umlenkenden Umlenkelements. Insofern kann die Führungseinrichtung auch bereits auf insbesondere bei Becherlegemaschinen zunächst im Wesentlichen vertikal transportierte Vermehrungsfrüchte einwirken und diese sicher in Richtung des Ausgabebereichs leiten. Beispielsweise ragt ein eine Umlenkung bewirkendes Leitbleich entsprechen hoch an dem Förderelement entlang.

Vorzugsweise weist die Führungseinrichtung, insbesondere das Führungselement und/oder das Gegenführungselement, eine im Betrieb rotierende Walze mit einer konkaven Mantelfläche auf, durch die eine Zentrierung der Vermehrungsfrüchte erreicht wird, wenn diese ein- oder zweireihig aus einem gemeinsamen Schöpfbereich heraus geschöpft werden.

Eine Zentrierung und zum Teil auch schwerkraftbedingte Positionierung der Vermehrungsfrüchte auf einem Führungselement wird insbesondere auch dadurch unterstützt, wenn gemäß einer weiteren Ausführungsform der Erfindung ein Element der Führungseinrichtung, insbesondere das Führungselement und/oder das Gegenführungselement, als im Betrieb um eine zu einer Horizontalen angewinkelten, insbesondere rechtwinkligen Umlenkachse umlaufend ausgebildet ist. Vorzugsweise sind in Richtung der Abgabe der Vermehrungsfrucht bei Verwendung eines Führungselements und eines Gegenführungselements diese spiegelsymmetrisch ausgebildet, um zwischen sich eine optimale Führung der Vermehrungsfrüchte bewirken zu können.

Insbesondere haben das Führungselement und das Gegenführungselement jeweils einander bereichsweise zugewandte Außenflächen, die aus einem zu einer Klemmung von zwischen dem Führungselement und dem Gegenführungselement angeordneten Vermehrungsfrüchten zumindest teilweise nachgiebigen Material ausgebildet sind. Solche beispielsweise aus Gummi oder Schaum ausgebildete Oberflächen führen zu einer sicheren und kontrollierten Mitnahme der Vermehrungsfrüchte, die jeweils die Umfangsgeschwindigkeit des Führungselements und des Gegenführungselements annehmen und somit besonders gut kontrolliert im Ausgabebereich in die Ausgaberichtung gefördert werden.

Vorzugsweise verläuft das Führungselement zumindest abschnittsweise, insbesondere in einem unteren Endbereich, zumindest im Wesentlichen parallel zu dem Gegenführungselement oder dem Trägerelement, wobei diese Betrachtung insbesondere für die Oberflächen der Führungs- und Förderelemente gilt, ungeachtet etwaiger Mitnehmer oder Förderelemente.

Um eine besonders gute Kontrolle der Ausgaberichtung zu ermöglichen, umfasst die Legevorrichtung erfindungsgemäß weiterhin eine Steuervorrichtung, die zu einer Ansteuerung der Führungseinrichtung, insbesondere des Führungselements und/oder des Gegenführungselements, in Abhängigkeit von einer Fortbewegungsgeschwindigkeit ausgebildet ist. Hierbei kann die Steuervorrichtung insbesondere zu einer derartigen Ansteuerung ausgebildet sein, dass eine Umlaufgeschwindigkeit des Führungselements bzw. des Gegenführungselements abhängig von der Fortbewegungsgeschwindigkeit der Legevorrichtung und insbesondere proportional zu dieser ausgebildet ist. Alternativ oder ergänzend kann die Steuervorrichtung auch dergestalt ausgebildet sein, dass ein ansonsten feststehendes Führungselement in Form eines Leitflächenelements, insbesondere eines Leitblechs, mittels eines Stellmittels und zur Veränderung der Ausgaberichtung einstellbar gehalten ist. Zu einer solchen Steuervorrichtung gehören übliche Mittel wie Sensoren oder Schnittstellen zur Erfassung von Eingaben, beispielsweise der Geschwindigkeit des Trägerelements oder einer Fortbewegungsgeschwindigkeit, vorzugsweise EDV-Mittel oder zumindest elektrische Mittel zur Ermittlung der gewünschten Antriebssignale sowie Steuerleitungen zur Übertragung der Signale an die zugehörigen Antriebselemente der Träger- und Führungselemente.

Weitere Vorteile und Einzelheiten der Beschreibung sind der nachfolgenden Figurenbeschreibung zu entnehmen. Schematisch dargestellt zeigt:
- Fig. 1: eine erfindungsgemäße Legevorrichtung,
- Fig. 2: einen Teil einer erfindungsgemäßen Legevorrichtung,
- Fig. 3: Teile des Gegenstands nach Fig. 2 in einer Seitenansicht,
- Fig. 4: eine Frontansicht eines Teils des Gegenstands nach Fig. 3,
- Fig. 5: eine Seitenansicht eines Teils einer weiteren erfindungsgemäßen Legevorrichtung,
- Fig. 6: eine identische Seitenansicht des Teils einer weiteren erfindungsgemäßen Legevorrichtung nach Fig. 5,
- Fig. 7: Geschwindigkeitsverläufe für von der Legevorrichtung nach Fig. 6 geförderten Vermehrungsfrüchten,
- Fig. 8: eine Draufsicht auf einen Teil einer weiteren erfindungsgemäßen Legevorrichtung.

Einzelne technische Merkmale der nach beschriebenen Ausführungsbeispiele können auch in Kombination mit vorbeschriebenen Ausführungsbeispielen sowie den Merkmalen eines unabhängigen Anspruchs und etwaiger weiterer Ansprüche zu erfindungsgemäßen Gegenständen kombiniert werden. Sofern sinnvoll werden funktional zumindest in Teilen gleichwirkende Elemente mit identischen Bezugsziffern versehen.

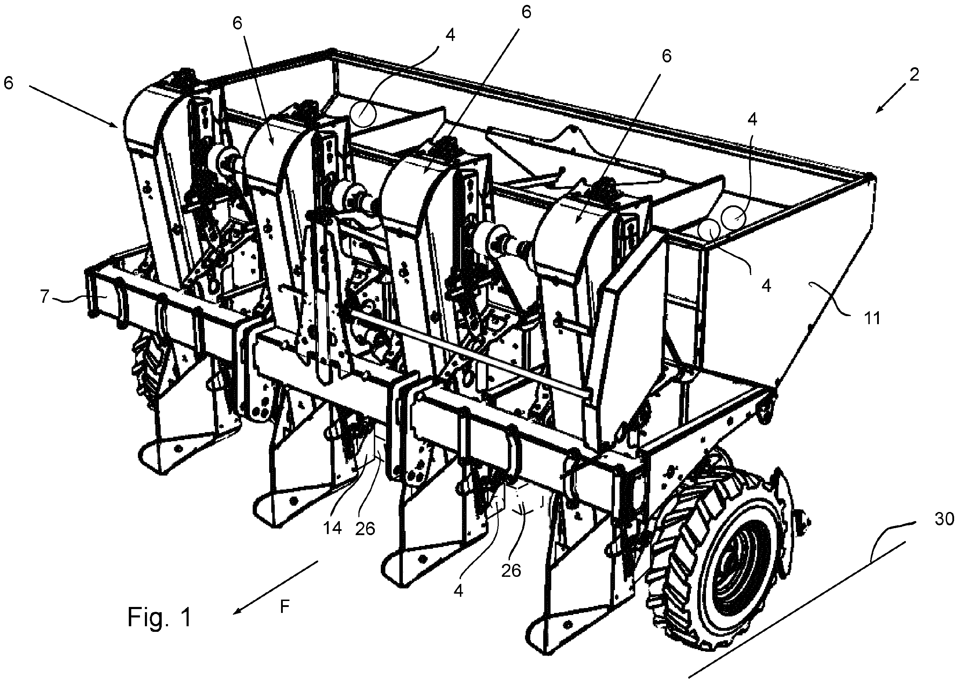

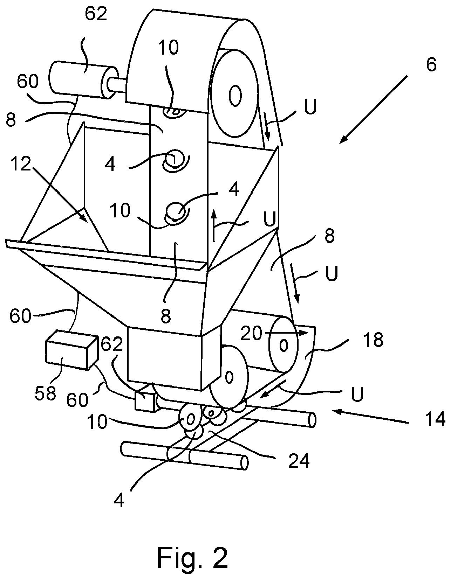

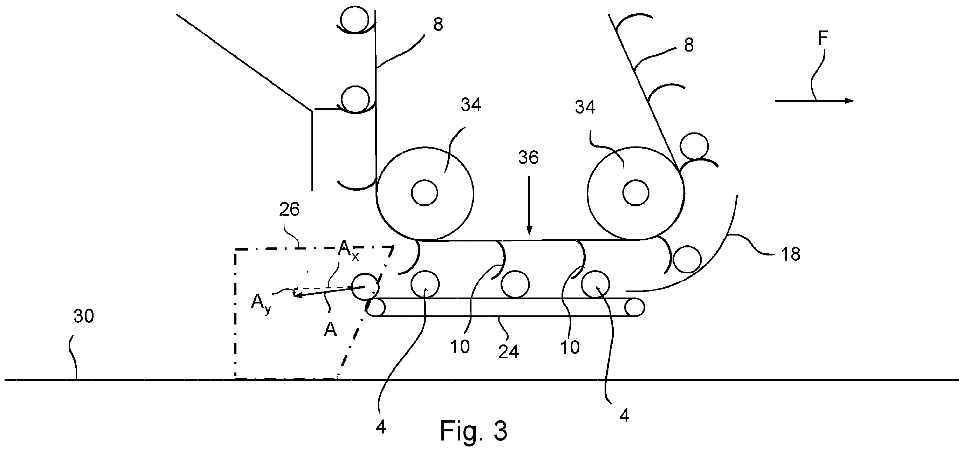

Eine als Becherlegemaschine ausgebildete Legevorrichtung für Hackfrüchte kann, wie in Fig. 1 dargestellt, als gezogene Becherlegemaschine 2 ausgebildet sein, über die (teilweise gestrichelt dargestellte) Vermehrungsfrüchte 4 in Form von Kartoffeln im Erdboden ausgesät werden. Hierfür gibt es mehrere an einem Vorrichtungsrahmen 7 fest angeordnete Fördervorrichtungen 6, mit jeweils einem im Betrieb in eine Umlaufrichtung U umlaufenden und vorliegend als Becherriemen ausgebildeten Trägerelement 8 (Fig. 2). Dieses weist jeweils in Umlaufrichtung U nacheinander angeordnete Förderelemente 10 in Form von Schöpfbechern auf. Die Vermehrungsfrüchte 4 werden im Betrieb zunächst von einem Bunker 11 in einen Schöpfraum 12 überführt, aus dem sie mittels der Förderelemente 10 vereinzelt über das Trägerelement 8 der Fördervorrichtung 6 entnommen werden. Zur Führung und Förderung der Vermehrungsfrüchte 4 in Richtung eines Ausgabebereichs 26 ist eine Führungseinrichtung 14 vorhanden (Fig. 3), die eine Mehrzahl von zum Teil miteinander wechselwirkenden Führungselementen aufweist. Einerseits ist ein als Leitblech 18 ausgebildetes Führungselement vorhanden, welches eine dem Trägerelement 8 zugewandte Leitoberfläche 20 aufweist. Ein weiteres, als Führungsblech 22 ausgebildetes Führungselement kann hierbei insbesondere zur Zentrierung vorgesehene Leitoberflächen 23 aufweisen, die ein weiteres, im Betrieb umlaufendes Führungselement in Form eines umlaufenden Riemenbandes 24 unterstützen.

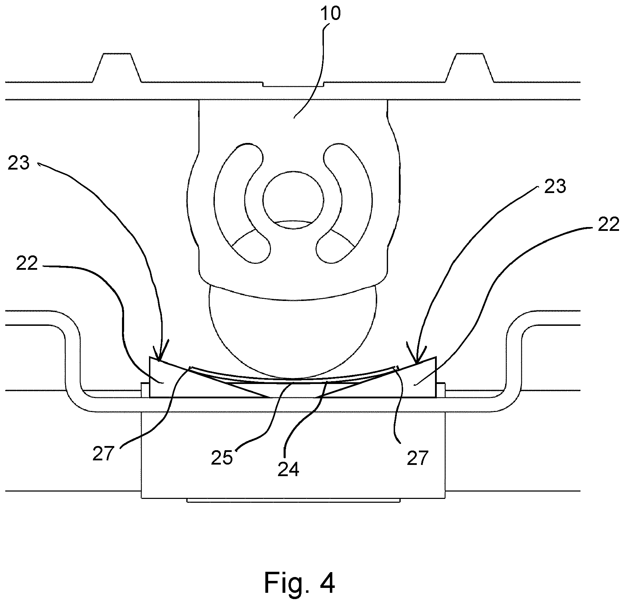

Das Riemenband 24 liegt zum Teil auf den Leitoberflächen 23 des Führungsblechs 22 auf und erhält so in der Ansicht der Figur 4 und in Förderrichtung betrachtet eine konkave Form mit einer tiefer liegenden Mitte 25 und hierzu vergleichsweise relativ höheren Seiten 27, so dass die zunächst auf dem Leitblech 18 bzw. auf dem dann folgenden Riemenband 24 transportierten Vermehrungsfrüchte 4 schwerkraftbedingt zentriert auf dem Riemenband 24 aufliegen.

Der Ausgabebereich 26 ist derjenige Bereich, in dem und durch den die Vermehrungsfrüchte 4 nach ihrer Abgabe aus der Legevorrichtung durchbewegt werden. Er schließt sich somit an die Führungseinrichtung 14 an und erstreckt sich bis zum Boden, wobei die genaue Form des Abgabebereichs 26 ja nach Führungseinrichtung 14 variieren kann.

Alternativ kann es sich bei dem Führungselement 22 auch um eine oder mehrere im Betrieb rotierende Walzen mit einer konkaven Oberfläche handeln.

Die Förderelemente 10 beschreiben im Betrieb eine in Richtung U umlaufende Bahn, die zunächst zur Aufnahme der Vermehrungsfrüchte 4 durch den Schöpfraum 12 verläuft und fallen dann auf dem nach unten verlaufenden Abschnitt des Trägerelements 8 auf das nächste, sich nach unten anschließende Förderelement 10. In der Umlenkung durch das Leitblech 18 wird dann schwerkraftbedingt die Vermehrungsfrucht umgelenkt. Während der Vereinzelung wird die Vermehrungsfrucht somit einerseits von einem ersten Förderelement 10 aus dem Schöpfraum 12 entnommen, von einem in Umlaufrichtung voranlaufenden Förderelement 10 zunächst im freien Fall auf der nach unten gerichteten Seite des Trägerelements aufgefangen und weitertransportiert, um dann anschließend wiederum von dem nachfolgenden Führungselement 24 in Richtung des Ausgabebereichs 26 weiterbewegt zu werden.

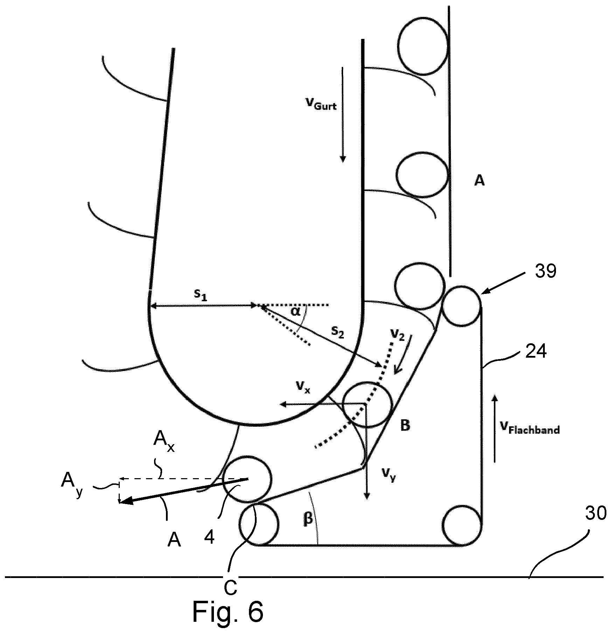

Besonders vorteilhaft ist eine Legevorrichtung, die wie in Fig. 2 einerseits ein zur Umlenkung der Vermehrungsfrüchte ausgebildetes Führungselement in Form eines Leitblechs 18 aufweist, welches die Vermehrungsfrüchte 4 im Endbereich des abfallenden Teils des Trägerelements 8 um zumindest 60° umlenkt, wobei die Vermehrungsfrüchte 4 anschließend auf ein umlaufendes, weiteres Führungselement gelangen, welches die Vermehrungsfrüchte 4 in Richtung eines Abgabepunktes C weiterleitet (Fig. 3 und 6). Durch die Erdbeschleunigung und die über das umlaufende Riemenband 24 erhaltene Beschleunigung der Vermehrungsfrucht 4 weist diese im Ausgabebereich 26 eine durch einen Vektor A beschriebene Ausgaberichtung auf, dessen vertikaler Anteil A_{y} kleiner ist als der horizontale Anteil Aₓ, bezogen auf einen Untergrund 30.

Der horizontale Anteil Aₓ ist der bestimmungsgemäßen Fortbewegungsrichtung F entgegengesetzt. Vorzugsweise ist das als Riemenband ausgebildete Trägerelement 8 gemäß der Ausführungsform nach Fig. 3 mit zwei als Umlenkrollen ausgebildeten Umlenkelementen 34 versehen, die auf einer Höhe über dem Untergrund 30 im Betrieb angeordnet sind und somit einen zum Untergrund 30 parallelen Trägerelementabschnitt 36 ausbilden. Hierdurch erfolgt eine insbesondere parallel zum Untergrund einhergehende Bewegung der Förderelemente 10, die in einem etwaigen Anlagezustand möglichst wenig Impuls und somit Relativbewegung der Vermehrungsfrüchte 4 vor dem Erreichen des Abgabebereichs 26 ausüben. Insbesondere im Ausführungsbeispiel der Fig. 3 ist die Ausgaberichtung A nahezu parallel zum Untergrund. Dies gilt insbesondere für Ausführungsbeispiele, bei denen die Umlenkung des Riemenbandes 24 am Ausgabebereich so scharf ist, dass die Vermehrungsfrucht 4 zum Zeitpunkt des Verlassens des Riemenbandes 24 nahezu unbeeinflusst von der Schwerkraft ist. In diesem Fall verläuft die Ausgaberichtung dann auch nahezu bzw. vollständig parallel zum Untergrund 30.

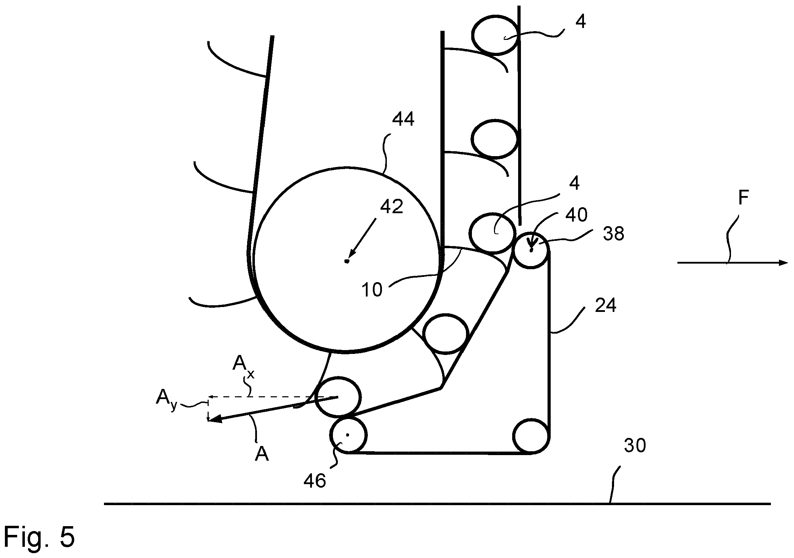

Eine besonders vorteilhafte Variante einer mit der Fördervorrichtung interagierenden Führungseinrichtung 14 weist ein umlaufendes Führungselement in Form eines Riemenbandes 24 auf, welches sich auf seiner zum Trägerelement hin gerichteten Seite an den Förderelementen 10 abstützt, so dass zwischen einander nachfolgenden Förderelementen 10 sowie dem insbesondere als Riemenbändern ausgebildeten Trägerelement 8 und Führungselement (Riemenband 24) ein in einer Seitenansicht gemäß Fig. 5 abgeschlossener Förderbereich entsteht, der mit dem umlaufenden Riemenband und dem Trägerelement 8 mitwandert.

Um eine Umlenkung der Vermehrungsfrüchte 4, die aus einer nahezu Vertikalbewegung von oben nach unten transportiert werden, zu bewirken, erstreckt sich hierfür das umlaufende Riemenband 24, welches durch drei Umlenkrollen 38 umgelenkt wird, mit einer Drehachse 40 bis auf eine Höhe einer Drehachse 42 einer Trägerelementumlenkrolle 44. Der von dieser Umlenkrolle 38 ausgebildete obere Endabschnitt 39, d.h. der oberhalb der Drehachse 40 befindliche Teil des Riemenbandes 24 ist vom Untergrund 30 weiter beabstandet als die Rotationsachse 42 des durch die Trägerelementumlenkrolle 44 ausgebildeten Umlenkelements. Der Abstand der Umlenkrolle 38 vom Trägerelement mit den Förderelementen ist so gewählt, dass die Förderelemente 10 zwangsweise in Kontakt mit dem Riemenband 24 gelangen und dieses mit umlenkend bis zur am Ausgabebereich angrenzenden unteren Umlenkrolle mit spannen.

Es versteht sich, dass die Bandgeschwindigkeiten des Trägerelements 8 und des Riemenbandes 24 hierbei aufeinander abgestimmt sein können. Die Verbindung zwischen den Förderelementen und dem Riemenband kann bei einer Variante der Erfindung allgemein so gut sein, dass das Riemenband durch das Trägerelement angetrieben wird oder umgekehrt.

Bei einer Ausgestaltung gemäß Fig. 5 ist die Ausgaberichtung A zum Zeitpunkt der Abgabe ebenfalls mit einer gegenüber der vertikalen Komponente deutlich größeren horizontalen Komponente Aₓ versehen, so dass eine möglichst geringe Relativgeschwindigkeit zwischen Vermehrungsfrucht 4 und dem Untergrund 30 vorliegt.

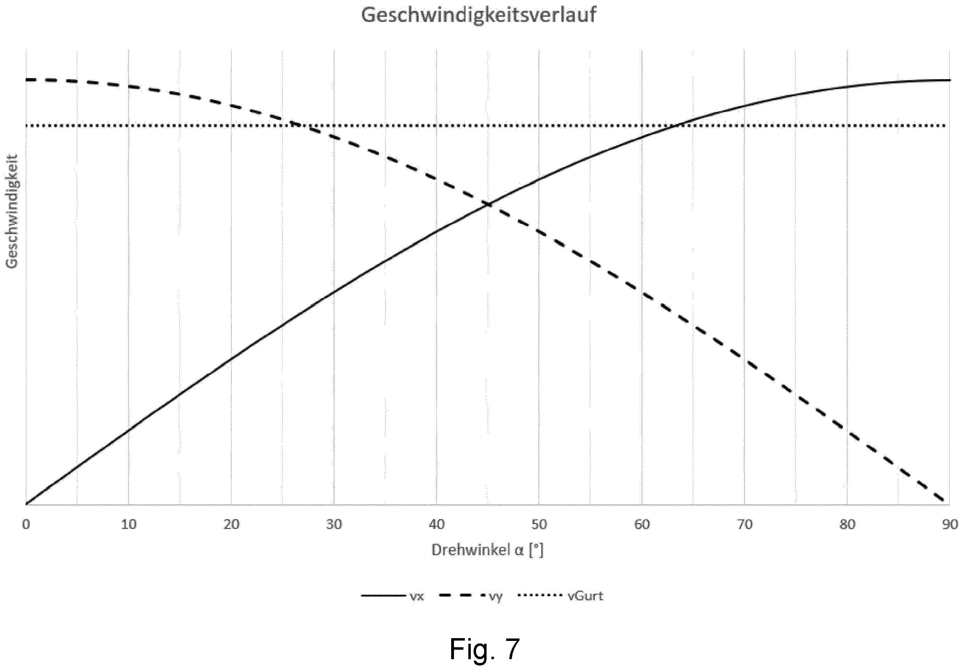

Theoretisch ergibt sich für einen Drehwinkel α ein Geschwindigkeitsvektor bestehend aus vertikalen Komponenten vₓ und v_{y} einer Vermehrungsfrucht gemäß Fig. 7. Hierbei ist erkennbar, dass die Vertikalkomponente bei einer Anordnung mit einer ausreichend vom Durchmesser her kleinen unteren Umlenkrolle 46 und einem hiermit einhergehenden unmittelbaren "Loslassen" der Vermehrungsfrucht 4 zu einer verstärkt horizontalen Abgabe der Vermehrungsfrucht 4 führt, indiziert bei einem Drehwinkel von 90°, wobei in diesem Ausführungsbeispiel die Drehachsen der Umlenkrolle 44 und der unteren Umlenkrolle 46 übereinander stehen (vgl. Fig. 5 und 6). Bei einem Drehwinkel o=0° weist die Vermehrungsfrucht beim vorliegenden Ausführungsbeispiel eine ausschließlich vertikale Geschwindigkeitskomponente auf. Bei einem Drehwinkel o>0°, erfolgt die Geschwindigkeitsänderung des Förderelements theoretisch abrupt, insofern würde die in der Fig. 7 dargestellte Geschwindigkeit anliegen. Tatsächlich ergibt sich aufgrund der Elastizität des Trägerelements eine allmähliche Beschleunigung des Förderelements von V_{Gurt} nach v₂, so dass der reale Geschwindigkeitsverlauf für v_{y} modifiziert ist. Die auf dem mit einer Geschwindigkeit v_{Flachband} umlaufenden Riemenband 24 bewegte Vermehrungsfrucht, deren Geschwindigkeitszunahme durch die Erdbeschleunigung beeinflusst wird, besitzt in der Praxis nach einer anfänglich geringeren Geschwindigkeit dann den dargestellten Geschwindigkeitsverlauf. Aufgrund der Umlenkung und Beschleunigung der Vermehrungsfrucht besitzt die Vermehrungsfrucht zum Abgabezeitpunkt eine Geschwindigkeitskomponente vₓ, die oberhalb der Gurtgeschwindigkeit v_{Gurt} liegt.

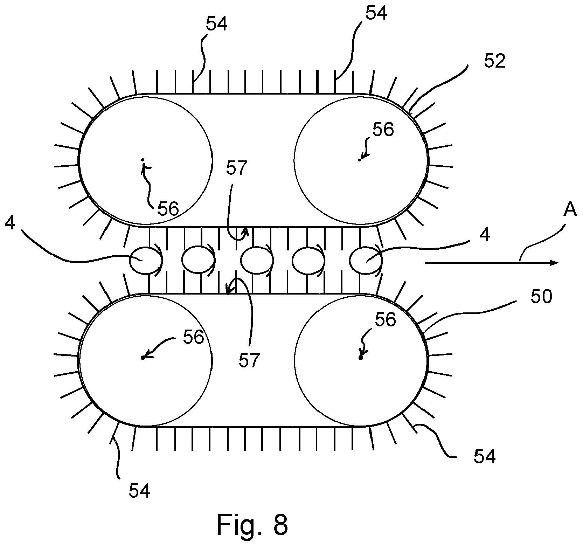

Während die bisherigen Ausführungsbeispiele ein um horizontale Drehachsen umlaufendes Riemenband 24 als Führungselement aufweisen, ist das Führungselement gemäß Fig. 8 als um vertikal zum Untergrund verlaufende Drehachsen ausgebildetes Führungselement in Form eines Führungsbandes 50 ausgebildet. Ein spiegelsymmetrisch ausgebildetes Gegenführungselement 52 ist in der in Fig. 8 dargestellten Draufsicht auf einer der Förderstrecke der Vermehrungsfrüchte 4 gegenüberliegenden Seite derselben entsprechend ausgebildet. Das Gegenführungselement bzw. Führungsband 52 weist genauso wie das Führungsband 50 Mitnahmeelemente 54 auf, über die Vermehrungsfrüchte mitgenommen bzw. geführt werden können und die sich lokal zur Umlaufrichtung angewinkelt erstrecken. Die Führungsbänder 50 und 52 verlaufen hierbei um vertikal angewinkelte weitere Umlenkachsen 56, die senkrecht auf dem Untergrund stehen.

Alternativ haben das Führungselement und das Gegenführungselement jeweils einander bereichsweise zugewandte Außenflächen 57, die insbesondere bei Verzicht auf Mitnahmeelemente 54 aus einem zu einer Klemmung von zwischen dem Führungselement und dem Gegenführungselement angeordneten Vermehrungsfrüchten zumindest teilweise nachgiebigen Material ausgebildet sein können.

Das Führungselement und das Gegenführungselement der Variante gemäß Fig. 8 verlaufen abschnittsweise parallel zueinander. Alternativ können die Drehachsen 56 auch horizontal zum Untergrund 30 ausgebildet sein, wobei dann etwaige Förderelemente 10 vor dem hierdurch ausgebildeten Kanal wieder hoch verschwenken und entsprechend die Vermehrungsfrüchte 4 über ein zusätzliches Leitblech in diesen dann ausgebildeten Kanal hineingebracht werden.

Mittels einer Steuervorrichtung 58, die über Steuerleitungen 60 Antriebe 62 der Führungseinrichtung 14 und der Fördervorrichtung 6 antriebsmäßig synchronisiert, erfolgt allgemein bei entsprechenden Ausführungsbeispielen eine Ansteuerung der Führungseinrichtung in Abhängigkeit der Fortbewegungsgeschwindigkeit des Trägerelements 10 und ggf. des gewünschten Legeabstands der Vermehrungsfrüchte 4, so dass eine Umlaufgeschwindigkeit des Führungselements insbesondere proportional abhängig zu der Fortbewegungsgeschwindigkeit bzw. Umlaufgeschwindigkeit des Trägerelements 8 ist (Fig. 2).

Im Ausführungsbeispiel nach Fig. 5 kann das als Riemenband 24 ausgebildete Führungselement durch Kontakt mit den Förderelementen 10 durch diese passiv angetrieben werden. Alternativ kann auch das Führungselement selbst mit einer motorischen Antriebsvorrichtung ausgestattet und zum Antrieb des Trägerelements verwendet werden.

## Patentansprüche

1. Legevorrichtung zum Legen von Hackfrüchten, insbesondere vorzugsweise als Becherlegemaschine (2) ausgebildete Legevorrichtung für Kartoffeln, umfassend einen Schöpfraum (12) zur Bevorratung von zu vereinzelnden Vermehrungsfrüchten (4) und zumindest eine zum Ausgeben der Vermehrungsfrüchte (4) ausgebildete Fördervorrichtung (6), die zumindest ein im Betrieb in eine Umlaufrichtung (U) umlaufendes Trägerelement (8), mehrere an dem Trägerelement (8) angeordnete Förderelemente (10) und eine Führungseinrichtung (14) mit zumindest einem Führungselement umfasst, das derart zur Führung der Vermehrungsfrüchte (4) in einen Ausgabebereich (26) ausgebildet ist, dass die Vermehrungsfrüchte (4) im Ausgabebereich (26) in eine Ausgaberichtung (A) von der Legevorrichtung ausgegeben werden, wobei jeweilige Förderelemente (10) im Betrieb eine Bahn beschreiben, die zur Aufnahme einer Vermehrungsfrucht (4) durch den Schöpfraum (12) verläuft,
**dadurch gekennzeichnet, dass** die Führungseinrichtung (14) dergestalt ausgebildet ist, dass ein vertikaler Anteil (A_{y}) der Ausgaberichtung (A) kleiner ist als ein horizontaler Anteil (Aₓ)der Ausgaberichtung (A), insbesondere wobei die Ausgaberichtung (A) zumindest in etwa horizontal verläuft.

2. Legevorrichtung nach Anspruch 1, **dadurch gekennzeichnet, dass** der horizontale Anteil (Aₓ) der Ausgaberichtung (A) einer bestimmungsgemäßen Fortbewegungsrichtung (F) der Legevorrichtung im Betrieb entgegengesetzt ist, insbesondere zumindest nahezu komplett und insbesondere vollständig entgegengesetzt ist.

3. Legevorrichtung nach einem der vorhergehenden Ansprüche, **dadurch gekennzeichnet, dass** das Führungselement zu einer Umlenkung der Vermehrungsfrüchte (4) um zumindest 30°, bevorzugt um zumindest 45°, besonders bevorzugt um zumindest 60° ausgebildet ist.

4. Legevorrichtung nach einem der vorhergehenden Ansprüche, **dadurch gekennzeichnet, dass** das Führungselement relativ zu einem Vorrichtungsrahmen (7) zumindest im Betrieb ortsfest ausgebildet ist.

5. Legevorrichtung nach Anspruch 4, **dadurch gekennzeichnet, dass** das Führungselement als Leitflächenelement, insbesondere als Leitblech (18), mit einer insbesondere dem Trägerelement (8) zugewandten Leitoberfläche (20) ausgebildet ist, insbesondere welche zur Zentrierung von von den Förderelementen (10) vereinzelten Vermehrungsfrüchten (4) vorgesehen ist.

6. Legevorrichtung nach einem der Ansprüche 1 bis 3, **dadurch gekennzeichnet, dass** das Führungselement im Betrieb umlaufend und insbesondere an den Förderelementen (10) abschnittsweise anliegend ausgebildet ist.

7. Legevorrichtung mit einer Mehrzahl von Führungselementen und nach einem der vorherigen Ansprüche, **dadurch gekennzeichnet, dass** zumindest eines der Führungselemente als Leitflächenelement, insbesondere als Leitblech (18), und eines der Führungselemente im Betrieb umlaufend ausgebildet ist.

8. Legevorrichtung nach einem der vorhergehenden Ansprüche, **dadurch gekennzeichnet, dass** das vorzugsweise als Riemenband ausgebildete Trägerelement (8) durch zumindest zwei und insbesondere durch zumindest drei im Betrieb rotierende Umlenkelemente (34) derart gelagert ist, dass ein an den Ausgabebereich (26) angrenzender Trägerelementabschnitt (36) im Betrieb zumindest im Wesentlichen geradlinig, insbesondere in die Ausgaberichtung (A), verläuft.

9. Legevorrichtung nach einem der vorhergehenden Ansprüche, **dadurch gekennzeichnet, dass** die Führungseinrichtung (14) ein im Betrieb insbesondere zumindest abschnittsweise parallel zum Führungselement und/oder in die Ausgaberichtung (A) umlaufendes Gegenführungselement umfasst.

10. Legevorrichtung nach einem der vorhergehenden Ansprüche, **dadurch gekennzeichnet, dass** die Führungseinrichtung (14) mehrere im Betrieb umlaufende und insbesondere an dem Führungselement und/oder an dem Gegenführungselement angeordnete und sich lokal zur Umlaufrichtung angewinkelt erstreckende Mitnehmerelemente (54) umfasst.

11. Legevorrichtung nach einem der vorhergehenden Ansprüche, **dadurch gekennzeichnet, dass** die Führungseinrichtung (14), insbesondere das Führungselement und/oder das Gegenführungselement, einen oberen Endabschnitt aufweist, der weiter von einem Untergrund (30) beabstandet ist als eine Rotationsachse eines unteren, im Betrieb rotierenden und das Trägerelement umlenkenden Umlenkelementes.

12. Legevorrichtung nach einem der vorhergehenden Ansprüche, **dadurch gekennzeichnet, dass** die Führungseinrichtung (14), insbesondere das Führungselement und/oder das Gegenführungselement, eine im Betrieb rotierende Walze mit einer konkaven Mantelfläche aufweist.

13. Legevorrichtung nach einem der vorhergehenden Ansprüche, **dadurch gekennzeichnet, dass** ein Element der Führungseinrichtung (14), insbesondere das Führungselement und/oder das Gegenführungselement, als im Betrieb um eine zu einer Horizontalen angewinkelten, insbesondere rechtwinkligen, Umlenkachse (56) umlaufend ausgebildet ist.

14. Legevorrichtung nach einem der vorhergehenden Ansprüche unter Einschluss von Anspruch 8, **dadurch gekennzeichnet, dass** das Führungselement und das Gegenführungselement jeweils einander bereichsweise zugewandte Außenflächen (57) haben, die aus einem zu einer Klemmung von zwischen dem Führungselement und dem Gegenführungselement angeordneten Vermehrungsfrüchte (4) zumindest teilweise nachgiebigen Material ausgebildet sind.

15. Legevorrichtung nach einem der vorhergehenden Ansprüche unter Einschluss von Anspruch 9, **dadurch gekennzeichnet, dass** das Führungselement zumindest abschnittsweise, insbesondere in einem unteren Endbereich, zumindest im Wesentlichen parallel zu dem Gegenführungselement oder dem Trägerelement (8) verläuft.

16. Legevorrichtung nach einem der vorhergehenden Ansprüche, **gekennzeichnet durch** eine Steuervorrichtung (58), die zu einer Ansteuerung der Führungseinrichtung (14), insbesondere des Führungselementes und/oder des Gegenführungselementes, in Abhängigkeit von einer Fortbewegungsgeschwindigkeit ausgebildet ist.
